# FASCICULE DE BREVET EUROPEEN

(11) **EP 2 859 217 B1**
(45) Date de publication et mention de la délivrance du brevet: **20.12.2023**
(21) Numéro de dépôt: 13733357.1
(22) Date de dépôt: 06.06.2013
(51) Int. Cl.: F02N 11/08, F02N 11/10, B60K 6/28, B60W 10/06, H02J 7/34, F02D 41/22

(54) **PROCÉDÉ DE DÉMARRAGE D'UN MOTEUR À COMBUSTION INTERNE, SYSTÈME ET CALCULATEUR ASSOCIÉS**
ANLASSVERFAHREN EINER BRENNKRAFTMASCHINE, SYSTEM UND STEUERGERÄT DAVON
START METHOD OF AN INTERNAL COMBUSTION ENGINE, SYSTEM AND CONTROL UNIT THEREOF

(30) Priorité: 08.06.2012 FR 1255382
(43) Date de publication de la demande: 15.04.2015
(73) Titulaire: Renault s.a.s, 92100 Boulogne Billancourt (FR)
(72) Inventeur: SAINT-LEGER, Gérard, F-78000 Versailles (FR); GASCHER, Alain, F-92310 Sevres (FR); CHUPIN, Paul-Eric, F-92500 Rueil Malmaison (FR)
(74) Mandataire: Renault Group
(86) Numéro de dépôt international: PCT/FR2013/051292
(87) Numéro de publication internationale: WO 2013/182817

(56) Documents cités:
- EP-A1- 2 138 712
- DE-A1-102005 026 866
- US-A1- 2005 256 617
- US-A1- 2012 025 601
- US-A1- 2012 032 506
- US-B1- 6 633 153

## Description

La présente invention se rapporte de manière générale au domaine de l'électricité et plus précisément à un procédé de démarrage d'un véhicule hybride.

On entend dans cette demande par véhicule hybride tout véhicule équipé d'au moins un moteur thermique et d'au moins un moteur électrique de traction, les deux types de moteur pouvant être utilisés chacun séparément ou simultanément.

Le démarrage d'un moteur thermique sur un véhicule provoque un fort appel de courant sur le réseau basse tension (i.e. le réseau 12 volts) du véhicule, encore appelé « réseau de bord », dû à l'activation d'un démarreur classique connecté à ce réseau de bord. Cet appel de courant provoque une chute de tension du réseau de bord susceptible de perturber les consommateurs du réseau de bord, notamment de réinitialiser les calculateurs du véhicule, lorsque la batterie basse tension d'alimentation du réseau de bord n'est pas assez chargée ou est défaillante.

Lorsqu'il s'agit d'un véhicule utilisant uniquement un moteur thermique, cette chute de tension n'a pas de conséquences fâcheuses car le démarrage du véhicule ne se fait qu'à l'arrêt. Cependant dans le cas d'un véhicule hybride, le démarrage du moteur thermique de ce véhicule peut avoir lieu à vitesse non nulle, par exemple lorsque le véhicule est en mode « électrique », c'est-à-dire que son moteur électrique de traction fonctionne, et que son conducteur demande plus de couple d'accélération. Dans ce cas la chute de tension due au démarreur du véhicule est susceptible de réinitialiser des calculateurs assurant des fonctions sécuritaires, telles que la direction assistée électrique, lorsque la batterie basse tension d'alimentation du réseau de bord du véhicule n'est pas assez chargée ou est défaillante.

Il existe donc un besoin d'assurer le démarrage d'un moteur thermique d'un véhicule hybride sans mettre en danger la sécurité du conducteur, lorsque la batterie basse tension du réseau de bord du véhicule hybride est défaillante.

Les véhicules hybrides comportant une batterie haute tension de traction, leur réseau de bord comporte un convertisseur courant continu-courant continu permettant d'alimenter le réseau de bord en parallèle de la batterie basse tension directement connectée au réseau de bord.

L'alimentation du réseau de bord par le convertisseur courant continu-courant continu seul n'étant pas conforme aux exigences de sécurité qui lui imposent deux sources d'alimentation, certains véhicules hybrides comportent en plus de la batterie basse tension d'alimentation du réseau de bord, un moyen de stockage supplémentaire dédié à l'alimentation du démarreur. Cela permet d'isoler sans danger le réseau de bord du démarreur et du moyen de stockage supplémentaire lors du démarrage du moteur thermique du véhicule hybride.

Cependant cette solution est coûteuse, encombrante et consommatrice d'énergie car elle nécessite un second moyen de stockage relativement lourd et qui doit être rechargé en roulage en plus de la batterie basse tension du véhicule hybride et de la batterie de traction du véhicule hybride.

La demande de brevet US20110049910 propose un véhicule hybride dans lequel le convertisseur courant continu-courant continu, connecté en entrée à la batterie haute tension du véhicule et en sortie à la fois au démarreur du véhicule et à la batterie basse tension du véhicule, est piloté de manière à ce que la tension en sortie du convertisseur puisse assurer le démarrage du moteur thermique en fonction notamment de la température du moteur ou de la batterie basse tension.

Cette solution présente l'inconvénient de nécessiter l'utilisation d'un convertisseur de très forte puissance (>4kW) avec un très fort courant de sortie (>300A).

La demande de brevet EP0989300 propose un véhicule hybride dans lequel le moteur thermique peut utiliser, en fonction de l'état de charge de la batterie basse tension du véhicule, le démarreur éventuellement assisté du moteur électrique. La demande de brevet US20040099234 décrit un système de démarrage similaire.

Cette solution présente l'inconvénient d'un couple moteur difficile à contrôler, et qui peut générer des à-coups. De plus l'ensemble du système est coûteux, long à mettre au point et induit certains choix d'architecture physique permettant d'associer les différents systèmes de démarrage.

La demande de brevet JP2011047380 décrit un véhicule dans lequel, en cas de tension insuffisante de la batterie basse tension du véhicule pour démarrer le moteur thermique, un moyen de stockage capacitif est automatiquement connecté au réseau de bord afin d'aider au démarrage du moteur thermique.

Cette solution est coûteuse et difficile à dimensionner au plus juste. Elle nécessite l'intégration d'un stockage supplémentaire. En effet si les capacités utilisées sont petites, on risque un problème en cas de défaillance de la batterie basse tension.

La demande de brevet WO201208305 décrit une batterie basse tension pour véhicule ayant la fonction « stop and start » (terme anglais pour désigner la fonction permettant d'arrêter automatiquement le moteur thermique du véhicule aux feux rouges), comportant un câblage dimensionné pour diminuer la chute de tension lors du redémarrage du moteur thermique.

Les demandes de brevet US 2012/025 601 A1, US 2012/032 506 A1, EP 2 138 712 A1, US 6 633 153 B1 et US 2005/256617 A1 divulguent individuellement ou en combinaison de nombreuses caractéristiques des revendications de la présente invention.

Cette solution, quoique peu coûteuse, n'est pas adaptée aux véhicules hybrides pour lesquels une défaillance de la batterie peut entraîner l'arrêt de fonctions sécuritaires à vitesse non nulle.

Un des buts de l'invention est de remédier à au moins une partie des inconvénients de la technique antérieure en fournissant un procédé de démarrage d'un moteur thermique de véhicule hybride et un système d'alimentation du réseau de bord d'un véhicule hybride permettant de sécuriser le démarrage du moteur thermique de ce véhicule hybride, à faible coût.

A cette fin, l'invention propose un procédé de démarrage d'un moteur thermique d'un véhicule hybride selon la revendication indépendante 1.

Grâce à l'invention, le convertisseur courant continu-courant continu continue d'alimenter en parallèle à la batterie basse tension du véhicule, son réseau de bord, en garantissant un niveau de tension suffisant pour tous les consommateurs sensibles du réseau de bord au moment de l'appel de courant du démarreur lorsque celui-ci est activé.

Selon une caractéristique avantageuse, ledit procédé comporte en outre une étape d'alerte d'un utilisateur dès que ladite tension d'alimentation du réseau de bord atteint un deuxième seuil bas prédéterminé, significatif d'une usure de ladite batterie basse tension, ledit deuxième seuil bas prédéterminé étant plus haut que ledit premier seuil bas prédéterminé.

Cette caractéristique permet à l'utilisateur de changer à l'occasion sa batterie basse tension avant d'être empêché de démarrer son moteur thermique.

Selon l'invention, l'étape de désactivation du démarreur est suivie d'une étape d'interdiction de démarrage dudit moteur thermique et de passage dans un mode dégradé d'utilisation du véhicule.

Cette caractéristique permet d'éviter de réitérer le procédé de démarrage selon l'invention dès que l'utilisateur demande plus de couple au véhicule hybride alors que la batterie basse tension est défaillante, ce qui évite de réactiver un mode en état défaillant.

L'invention concerne aussi un système d'alimentation du réseau de bord d'un véhicule hybride selon la revendication indépendante 3.

Le système selon l'invention présente l'avantage d'être peu coûteux au regard de l'art antérieur, et d'être facile à intégrer dans un véhicule.

Avantageusement, le système d'alimentation selon l'invention comporte en outre des moyens d'alerte d'un utilisateur dès que la tension fournie par lesdits moyens de mesure atteint un deuxième seuil bas prédéterminé, significatif d'une usure de ladite batterie basse tension, ledit deuxième seuil bas prédéterminé étant plus haut que ledit premier seuil bas prédéterminé.

Selon l'invention, lesdits moyens de désactivation comportent des moyens d'interdiction du démarrage dudit moteur thermique et des moyens de passage dans un mode dégradé d'utilisation du véhicule.

L'invention concerne enfin un calculateur de véhicule hybride caractérisé en ce qu'il comprend les moyens pour mettre en oeuvre le procédé de démarrage selon l'invention.

Le système selon l'invention ainsi que le calculateur selon l'invention présentent des avantages analogues à ceux du procédé de démarrage selon l'invention.

D'autres caractéristiques et avantages apparaîtront à la lecture d'un mode de réalisation préféré décrit en référence aux figures dans lesquelles :
- la figure 1 représente un système d'alimentation du réseau de bord d'un véhicule hybride selon l'invention, dans ce mode de réalisation de l'invention,
- et la figure 2 représente des étapes du procédé de démarrage d'un moteur thermique de véhicule hybride selon l'invention, dans ce mode de réalisation de l'invention.

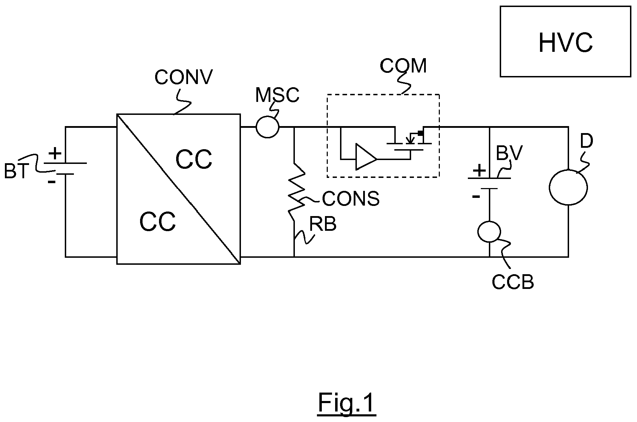

Selon un mode préféré de réalisation de l'invention représenté à la figure 1, le système d'alimentation du réseau de bord d'un véhicule hybride selon l'invention comporte un moteur électrique (non représenté) alimenté par une batterie haute tension de traction BT reliée au réseau de bord RB du véhicule par l'intermédiaire d'un convertisseur courant continu-courant continu CONV.

L'entrée du convertisseur CONV est donc reliée à la batterie de traction BT. La sortie du convertisseur CONV est connectée en parallèle au réseau de bord RB comportant des consommateurs électriques CONS, parmi lesquels des calculateurs du véhicule hybride, pouvant assurer des fonctions sécuritaires telles que la direction assistée électrique, le calculateur superviseur HVC du véhicule hybride, et des accessoires tels qu'un système de navigation embarqué ou la radio.

Sur le bus positif reliant le convertisseur CONV à la borne positive du réseau de bord RB se trouve un moyen de mesure MSC de la tension d'alimentation du réseau de bord RB, tel qu'un voltmètre ou un capteur de tension.

Une batterie basse tension BV du véhicule est également connectée en parallèle au réseau de bord RB. Le bus positif reliant la borne positive de la batterie basse tension BV à la borne positive du réseau de bord RB comporte un commutateur COM. La borne négative de la batterie basse tension BV est reliée au bus négatif du réseau de bord RB par l'intermédiaire d'un capteur de courant CCB permettant au calculateur superviseur HVC d'évaluer l'état de charge de la batterie basse tension BV.

La batterie basse tension BV est connectée par un montage parallèle à un démarreur D d'un moteur thermique du véhicule hybride. La batterie basse tension BV et le démarreur D sont connectés en aval au réseau de bord RB par rapport au convertisseur CONV, connecté en amont au réseau de bord RB, permettant ainsi au commutateur COM d'isoler le réseau de bord RB et le convertisseur CONV de la batterie basse tension BV et du démarreur D lorsqu'il est en position ouverte.

Le commutateur COM comporte un ensemble de transistors de puissance, préférentiellement de type MOS, bien que des transistors de type IGBT ou bipolaires puissent également être utilisés. Afin de minimiser les pertes de conduction, la taille du commutateur, et d'obtenir un bon comportement capacitaire, celui-ci est par exemple constitué de cinq transistors MOS montés en parallèle. Il est cependant possible d'utiliser un autre nombre de transistors, par exemple un seul transistor de puissance de taille plus importante.

L'utilisation d'un commutateur de type transistor permet d'obtenir un temps de réponse du commutateur très court, et une ouverture du commutateur très franche, sans arcs de courant. L'utilisation d'un relais de puissance ne conviendrait pas du fait d'un temps de réponse trop important risquant d'endommager les consommateurs du réseau de bord. De plus les relais de puissance présentent un risque de défaillance à l'ouverture, c'est-à-dire restent fermés lorsqu'ils sont hors service, alors que les transistors présentent au contraire un risque de défaillance à la fermeture, ce qui est plus sécuritaire.

Le commutateur COM est piloté par le calculateur superviseur HVC du véhicule, en fonction de la tension d'alimentation du réseau de bord RB, mesurée par les moyens MSC de mesure.

Le commutateur COM est fermé par défaut lorsque le véhicule fonctionne. Ainsi la batterie basse tension BV est connectée en parallèle du convertisseur CONV selon un dimensionnement permettant d'assurer les fonctions normales de filtrage et de redondance par rapport au convertisseur CONV. Lorsqu'on lance le démarreur D, la batterie basse tension BV délivre l'essentiel de la puissance appelée par le démarreur D et le convertisseur CONV participe jusqu'à son courant maximal avec une tension d'alimentation du réseau de bord minimum assurée par la batterie basse tension BV.

Lorsque la batterie basse tension BV est usée ou présente une défaillance inattendue, et ne peut plus assurer une tension d'alimentation du réseau de bord minimum pour assurer un fonctionnement normal des consommateurs électriques CONS, le système selon l'invention protège ces consommateurs en ouvrant le commutateur COM, isolant ainsi la batterie basse tension BV et le démarreur D du réseau de bord RB.

Avant d'atteindre cet état de défaillance de la batterie, le système selon l'invention alerte l'utilisateur lorsque la batterie commence à être usée de telle manière qu'elle devrait être contrôlée ou remplacée.

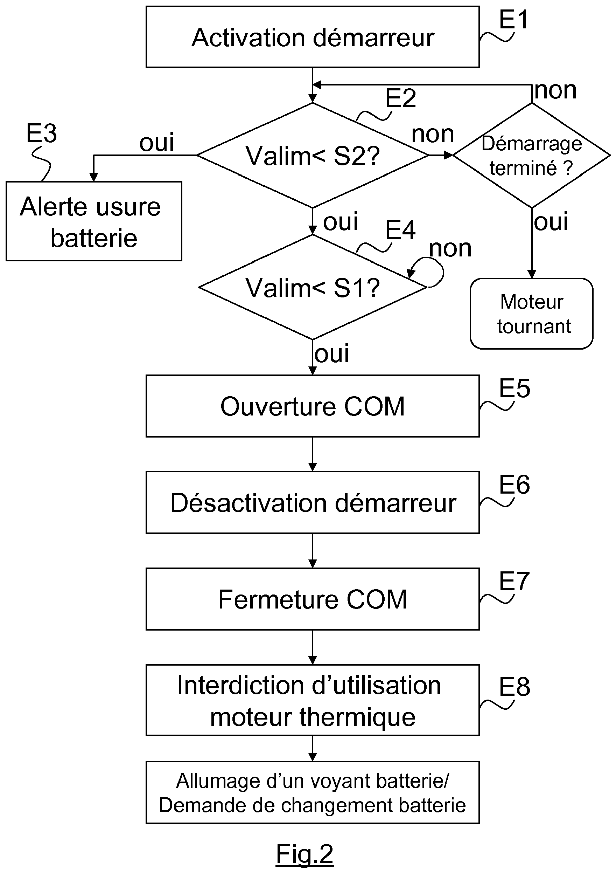

En référence à la **figure 2****,** le procédé de démarrage selon l'invention est décrit plus précisément sous la forme d'un algorithme comportant des étapes E1 à E8.

Le procédé de démarrage selon l'invention est mis en oeuvre au moins en partie dans le calculateur superviseur HVC du véhicule. En variante le procédé est implémenté dans un autre calculateur du véhicule tel que l'ABSCM (d'après l'anglais «Anti-lock Braking System Control Module»).

L'étape E1 est l'activation du démarreur D par le calculateur superviseur HVC, par exemple suite à une demande d'accélération du conducteur, alors que le véhicule roule en utilisant le moteur électrique du véhicule. Cette étape E1 provoque une chute de la tension d'alimentation Valim du réseau de bord, mesurée par les moyens de mesure MSC qui fournit en temps réel la valeur de cette mesure au calculateur superviseur HVC.

L'étape E2, qui a lieu de manière continue au moins dès l'activation du démarreur D, est la comparaison de la tension d'alimentation Valim du réseau de bord RB avec un deuxième seuil bas de tension prédéterminé S2, plus haut qu'un premier seuil bas prédéterminé S1.

Le premier seuil bas prédéterminé S1 correspond à une tension minimale d'alimentation du réseau de bord justifiant l'ouverture du commutateur COM afin de protéger les consommateurs électriques CONS du réseau de bord RB. Ce premier seuil bas prédéterminé est compris entre 8 et 11 volts et est préférentiellement égal à environ 10 volts.

Le deuxième seuil bas prédéterminé S2 correspond à un seuil d'usure de la batterie basse tension BV justifiant d'alerter le conducteur pour qu'il contrôle ou remplace cette batterie. Ce deuxième seuil bas prédéterminé est compris entre 11 et 12,2 volts et est préférentiellement égal à environ 11,5 volts. En effet une valeur de 12,2 volts pour une batterie basse tension d'un véhicule hybride est signe d'anomalie, car dans un véhicule hybride la batterie basse tension est beaucoup moins sollicitée que dans un véhicule purement thermique et devrait donc toujours être à un niveau de charge plus élevé.

Il est de plus à noter que les valeurs données ci-dessus du deuxième seuil prédéterminé S2 sont à mettre en relation avec les valeurs du premier seuil prédéterminé S1 (par exemple pour une valeur de S1 de 8 volts, une valeur de S2 de 11 volts convient).

Lors de l'étape E2, si la tension d'alimentation Valim du réseau de bord est supérieure au deuxième seuil bas prédéterminé S2, alors le calculateur superviseur HVC continue de surveiller le niveau de la tension d'alimentation Valim selon l'étape E2 jusqu'à ce que le démarreur D ne soit plus sollicité. Si au contraire la tension d'alimentation Valim du réseau de bord est inférieure au deuxième seuil bas prédéterminé S2, alors le calculateur superviseur HVC alerte l'utilisateur de l'usure de la batterie selon une étape E3, par exemple en allumant un voyant spécifique, et passe simultanément à l'étape E4.

Il est à noter que le capteur de courant CCB permet également au calculateur superviseur HVC du véhicule de déterminer un état de défaillance inattendu de la batterie basse tension BV et d'alerter l'utilisateur de cet état, indépendamment de la mesure fournie par les moyens de mesure MSC, permettant ainsi de fiabiliser le niveau d'information fourni à l'utilisateur.

L'étape E4 est la comparaison de la tension d'alimentation Valim du réseau de bord RB avec le premier seuil bas de tension prédéterminé S1. Cette étape a lieu après l'étape E2 si la tension d'alimentation Valim du réseau de bord RB est inférieure ou égale au deuxième seuil bas prédéterminé S2, mais en variante cette étape E4 a lieu de manière continue au moins dès l'activation du démarreur D, en parallèle de l'étape E2. Dans une autre variante l'étape E1 est directement suivie de l'étape E4 et les étapes E2 et E3 ne sont pas implémentées sur le calculateur superviseur HVC.

Lors de l'étape E4, si la tension d'alimentation Valim du réseau de bord est supérieure au premier seuil bas prédéterminé S1, alors le calculateur superviseur HVC continue de surveiller le niveau de la tension d'alimentation Valim selon l'étape E4 jusqu'à ce que le démarreur D ne soit plus sollicité. Si au contraire la tension d'alimentation Valim du réseau de bord est inférieure ou égale au premier seuil bas prédéterminé S1, alors le calculateur superviseur HVC pilote le commutateur COM de manière à l'ouvrir, selon une étape E5. Cette ouverture se fait avec un temps de réponse de l'ordre de quelques millisecondes. Le premier seuil bas prédéterminé S1 est paramétré de telle sorte qu'une sous-tension sur le réseau de bord RB dure moins d'une milliseconde. Typiquement la sous-tension à 8,5V environ dure moins de 0,5 milliseconde.

Il est à noter qu'en variante, l'ouverture du commutateur COM dans cette étape E5 est directement pilotée par les moyens de mesure MSC associés au dispositif électronique de commande des transistors MOS du commutateur COM : le passage sous le seuil prédéterminé de tension S1 provoque ainsi l'ouverture du commutateur COM sans passer par le calculateur superviseur HVC ce qui améliore le temps de réponse du système selon l'invention.

L'ouverture du commutateur COM interrompt la chute de tension sur le réseau de bord RB due à l'activation du démarreur D, car la puissance consommée par le démarreur D n'est alors plus prélevée que sur la batterie basse tension BV. L'alimentation du réseau de bord RB est alors assurée par le convertisseur CONV seulement.

L'étape suivante E6 est la désactivation du démarreur D par le calculateur superviseur HVC, qui abandonne de ce fait le démarrage du moteur thermique du véhicule.

L'étape suivante E7 est la fermeture du commutateur COM par le calculateur superviseur HVC, pour retrouver un réseau de bord RB associant le convertisseur CONV et la batterie basse tension BV pour un fonctionnement nominal conforme aux exigences de sécurité.

Entre l'ouverture du commutateur à l'étape E5 et sa fermeture à l'étape E7, 20 millisecondes environ s'écoulent. Cette durée est tout à fait acceptable par rapport aux exigences de sécurité imposées à l'alimentation du réseau de bord, puisque le convertisseur CONV est lui-même fiabilisé. Ainsi pendant ces 20 millisecondes, le convertisseur CONV devrait être au moins partiellement opérationnel, les autres risques de défaillance ayant été normalement préalablement détectés par d'autres systèmes de surveillance avant ces 20 millisecondes.

L'étape suivante E8 est l'interdiction du démarrage du moteur thermique jusqu'à l'arrêt du véhicule, associée à un passage en mode dégradé tel que l'utilisation du moteur électrique seul. Ce passage en mode dégradé est par exemple indiqué au conducteur par un voyant sur le tableau de bord du véhicule.

Il est à noter que l'ordre des étapes E1 à E8 n'est qu'un mode de réalisation de l'invention, d'autres modes de réalisation étant envisageables. Par exemple en variante de réalisation du procédé selon l'invention, l'étape E8 a lieu juste après l'étape E6. De plus toutes ces étapes ne sont pas nécessaires pour implémenter l'invention, notamment les étapes E2 et E3 peuvent ne pas être implémentées.

## Revendications

1. Procédé de démarrage d'un moteur thermique d'un véhicule hybride comportant au moins un moteur électrique de traction, un démarreur (D), une batterie de traction (BT) connectée au réseau de bord (RB) dudit véhicule par l'intermédiaire d'un convertisseur courant continu-courant continu (CONV), et une batterie basse tension (BV) connectée également audit réseau de bord (RB), le procédé comportant les étapes de :
- activation (E1) du démarreur (D), celui-ci étant connecté en parallèle à ladite batterie basse tension (BV),
- comparaison (E4) de la tension d'alimentation (Valim) du réseau de bord avec un premier seuil bas prédéterminé (S1),
- ouverture (E5) d'un commutateur (COM) comportant au moins un transistor pour isoler le réseau de bord (RB) de ladite batterie basse tension (BV) et du démarreur (D) dès que ladite tension d'alimentation (Valim) du réseau de bord (RB) est inférieure ou égale audit premier seuil bas prédéterminé (S1),
ladite étape d'ouverture (E5) étant suivie d'étapes de :
- désactivation (E6) dudit démarreur (D),
- et fermeture (E7) dudit commutateur (COM),
l'étape de désactivation (E6) du démarreur (D) étant suivie d'une étape (E8) d'interdiction de démarrage dudit moteur thermique et de passage dans un mode dégradé d'utilisation du véhicule.

2. Procédé de démarrage selon la revendication 1, **caractérisé en ce qu'**il comporte en outre une étape (E3) d'alerte d'un utilisateur dès que ladite tension d'alimentation (Valim) du réseau de bord (RB) atteint un deuxième seuil bas prédéterminé (S2), significatif d'une usure de ladite batterie basse tension (BV), ledit deuxième seuil bas prédéterminé (S2) étant plus haut que ledit premier seuil bas prédéterminé (S1).

3. Système d'alimentation du réseau de bord (RB) d'un véhicule hybride comportant au moins un moteur thermique et un moteur électrique de traction, une batterie de traction (BT) connectée audit réseau de bord (RB) dudit véhicule par l'intermédiaire d'un convertisseur courant continu-courant continu (CONV), une batterie basse tension (BV) connectée également audit réseau de bord (RB), un démarreur (D) monté en parallèle à ladite batterie basse tension (BV), et des moyens d'activation du démarreur (D), comportant en outre:
- des moyens de mesure (MSC) de la tension d'alimentation (Valim) du réseau de bord (RB),
- un commutateur (COM) comportant au moins un transistor, connecté entre le réseau de bord (RB) d'une part, et ladite batterie basse tension (BV) et ledit démarreur (D) d'autre part,
- des moyens d'ouverture dudit commutateur (COM) dès que ladite tension fournie par lesdits moyens de mesure (MSC) atteint un premier seuil bas prédéterminé (S1),
- des moyens de désactivation dudit démarreur (D) déclenchés par lesdits moyens d'ouverture,
- et des moyens de fermeture dudit commutateur (COM) déclenchés par lesdits moyens de désactivation,
lesdits moyens de désactivation comportant des moyens d'interdiction du démarrage dudit moteur thermique et des moyens de passage dans un mode dégradé d'utilisation du véhicule.

4. Système d'alimentation selon la revendication 3, **caractérisé en ce qu'**il comporte en outre des moyens d'alerte d'un utilisateur dès que la tension fournie par lesdits moyens de mesure (MSC) atteint un deuxième seuil bas prédéterminé (S2), significatif d'une usure de ladite batterie basse tension (BV), ledit deuxième seuil bas prédéterminé (S2) étant plus haut que ledit premier seuil bas prédéterminé (S1).

5. Calculateur (HVC) de véhicule hybride **caractérisé en ce qu'**il comprend les moyens pour mettre en oeuvre le procédé de démarrage selon l'une quelconque des revendications 1 à 2.

## Patentansprüche

1. Verfahren zum Anlassen eines Verbrennungsmotors eines Hybridfahrzeugs, das mindestens einen elektrischen Traktionsmotor, einen Anlasser (D), eine Traktionsbatterie (BT), die über einen Gleichstrom-Gleichstrom-Wandler (CONV) mit dem Bordnetz (RB) des Fahrzeugs verbunden ist, und eine Niederspannungsbatterie (BV), die ebenfalls mit dem Bordnetz (RB) verbunden ist, umfasst, wobei das Verfahren die folgenden Schritte umfasst:
- Aktivieren (E1) des Anlassers (D), wobei dieser mit der Niederspannungsbatterie (BV) parallel verbunden ist,
- Vergleichen (E4) der Versorgungsspannung (Valim) des Bordnetzes mit einem ersten vorbestimmten unteren Schwellenwert (S1),
- Öffnen (E5) eines Schalters (COM), der mindestens einen Transistor umfasst, um das Bordnetz (RB) von der Niederspannungsbatterie (BV) und dem Anlasser (D) zu trennen, sobald die Versorgungsspannung (Valim) des Bordnetzes (RB) kleiner als oder gleich dem ersten vorbestimmten unteren Schwellenwert (S1) ist,
wobei auf den Schritt des Öffnens (E5) folgende Schritte folgen:
- Deaktivieren (E6) des Anlassers (D),
- und Schließen (E7) des Schalters (COM),
wobei auf den Schritt des Deaktivierens (E6) des Anlassers (D) ein Schritt (E8) des Untersagens eines Anlassens des Verbrennungsmotors und des Übergangs in einen eingeschränkten Betriebsmodus des Fahrzeugs folgt.

2. Anlassverfahren nach Anspruch 1, **dadurch gekennzeichnet, dass** es ferner einen Schritt (E3) des Warnens eines Benutzers umfasst, sobald die Versorgungsspannung (Valim) des Bordnetzes (RB) einen zweiten vorbestimmten unteren Schwellenwert (S2) erreicht, der einen Verschleiß der Niederspannungsbatterie (BV) anzeigt, wobei der zweite vorbestimmte untere Schwellenwert (S2) höher als der erste vorbestimmte untere Schwellenwert (S1) ist.

3. System zur Versorgung des Bordnetzes (RB) eines Hybridfahrzeugs, das mindestens einen Verbrennungsmotor und einen elektrischen Traktionsmotor, eine Traktionsbatterie (BT), die über einen Gleichstrom-Gleichstrom-Wandler (CONV) mit dem Bordnetz (RB) des Fahrzeugs verbunden ist, eine Niederspannungsbatterie (BV), die ebenfalls mit dem Bordnetz (RB) verbunden ist, einen Anlasser (D), der zu der Niederspannungsbatterie (BV) parallel geschaltet ist, und Mittel zum Aktivieren des Anlassers (D) umfasst, ferner umfassend:
- Mittel zum Messen (MSC) der Versorgungsspannung (Valim) des Bordnetzes (RB),
- einen Schalter (COM), der mindestens einen Transistor umfasst und zwischen dem Bordnetz (RB) einerseits und der Niederspannungsbatterie (BV) und dem Anlasser (D) andererseits verbunden ist,
- Mittel zum Öffnen des Schalters (COM), sobald die durch die Messmittel (MSC) bereitgestellte Spannung einen ersten vorbestimmten unteren Schwellenwert (S1) erreicht,
- Mittel zum Deaktivieren des Anlassers (D), die durch die Öffnungsmittel ausgelöst werden,
- und Mittel zum Schließen des Schalters (COM), die durch die Deaktivierungsmittel ausgelöst werden,
wobei die Deaktivierungsmittel Mittel zum Untersagen des Anlassens des Verbrennungsmotors und Mittel für einen Übergang in einen eingeschränkten Betriebsmodus des Fahrzeugs umfassen.

4. Versorgungssystem nach Anspruch 3, **dadurch gekennzeichnet, dass** es ferner Mittel zum Warnen eines Benutzers umfasst, sobald die durch die Messmittel (MSC) bereitgestellte Spannung einen zweiten vorbestimmten unteren Schwellenwert (S2) erreicht, der einen Verschleiß der Niederspannungsbatterie (BV) anzeigt, wobei der zweite vorbestimmte untere Schwellenwert (S2) höher als der erste vorbestimmte untere Schwellenwert (S1) ist.

5. Steuergerät (HVC) eines Hybridfahrzeugs, **dadurch gekennzeichnet, dass** es die Mittel zum Umsetzen des Anlassverfahrens nach einem beliebigen der Ansprüche 1 bis 2 beinhaltet.

## Claims

1. Method for starting an internal combustion engine of a hybrid vehicle comprising at least an electric traction motor, a starter (D), a traction battery (BT) connected to the on-board network (RB) of said vehicle via a DC-DC converter (CONV), and a low-voltage battery (BV) also connected to said on-board network (RB), the method comprising the steps of:
- activating (E1) the starter (D), the latter being connected in parallel to said low-voltage battery (BV),
- comparing (E4) the supply voltage (Valim) of the on-board network with a first predetermined lower threshold (S1),
- opening (E5) a switch (COM) comprising at least one transistor for insulating the on-board network (RB) from said low-voltage battery (BV) and from the starter (D) when said supply voltage (Valim) of the on-board network (RB) is below or equal to said first predetermined lower threshold (S1),
said opening step (E5) being followed by steps of:
- deactivating (E6) said starter (D),
- and closing (E7) said switch (COM),
the step (E6) of deactivating the starter (D) being followed by a step (E8) of prohibiting starting of said internal combustion engine and of moving into a degraded mode of use of the vehicle.

2. Starting method according to Claim 1, **characterized in that** it further comprises a step (E3) of alerting a user when said supply voltage (Valim) of the on-board network (RB) reaches a second predetermined lower threshold (S2), which is symptomatic of wear of said low-voltage battery (BV), said second predetermined lower threshold (S2) being higher than said first predetermined lower threshold (S1).

3. Power supply system of the on-board network (RB) of a hybrid vehicle comprising at least an internal combustion engine and an electric traction motor, a traction battery (BT) connected to said on-board network (RB) of said vehicle via a DC-DC converter (CONV), a low-voltage battery (BV) also connected to said on-board network (RB), a starter (D) connected in parallel to said low-voltage battery (BV), and means for activating the starter (D), further comprising:
- means (MSC) for measuring the supply voltage (Valim) of the on-board network (RB),
- a switch (COM) comprising at least one transistor, connected between the on-board network (RB), on the one hand, and said low-voltage battery (BV) and said starter (D), on the other hand,
- means for opening said switch (COM) when said voltage delivered by said measurement means (MSC) reaches a first predetermined lower threshold (S1),
- means for deactivating said starter (D) which are triggered by said opening means,
- and means for closing said switch (COM) which are triggered by said deactivation means,
said deactivation means comprising means for prohibiting starting of said internal combustion engine and means for moving into a degraded mode of use of the vehicle.

4. Power supply system according to Claim 3, **characterized in that** it further comprises means for alerting a user when the voltage delivered by said measurement means (MSC) reaches a second predetermined lower threshold (S2), which is symptomatic of wear of said low-voltage battery (BV), said second predetermined lower threshold (S2) being higher than said first predetermined lower threshold (S1).

5. Computer (HVC) of a hybrid vehicle, **characterized in that** it comprises means for implementing the starting method according to either one of Claims 1 and 2.
